(19) Europäisches Patentamt
European Patent Office
Office européen des brevets

(11) **EP 3 798 570 B1**

(12) **EUROPÄISCHE PATENTSCHRIFT**

(45) Veröffentlichungstag und Bekanntmachung des Hinweises auf die Patenterteilung:
**28.06.2023   Patentblatt 2023/26**

(21) Anmeldenummer: **19200257.4**

(22) Anmeldetag: **27.09.2019**

(51) Internationale Patentklassifikation (IPC):
***G01B 21/04*** *(2006.01)*   *G01B 11/25* *(2006.01)*

(52) Gemeinsame Patentklassifikation (CPC):
**G01B 21/042;** G01B 11/25

(54) **VERFAHREN ZUR KALIBRIERUNG EINES OPTISCHEN MESSSYSTEMS, OPTISCHES MESSSYSTEM UND KALIBRIEROBJEKT FÜR EIN OPTISCHES MESSSYSTEM**

OPTICAL MEASURING SYSTEM AND METHOD FOR CALIBRATING AN OPTICAL MEASURING SYSTEM, AND CALIBRATION OBJECT FOR AN OPTICAL MEASURING SYSTEM

PROCÉDÉ D'ÉTALONNAGE D'UN SYSTÈME DE MESURE OPTIQUE, SYSTÈME DE MESURE OPTIQUE ET OBJET D'ÉTALONNAGE POUR UN SYSTÈME DE MESURE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.03.2021   Patentblatt 2021/13**

(73) Patentinhaber: **Stemmer Imaging AG
82178 Puchheim (DE)**

(72) Erfinder:
• **Gralla, Phil
82178 Puchheim (DE)**
• **Schwager, Stefan
82256 Fürstenfeldbruck (DE)**

(74) Vertreter: **Isarpatent
Patent- und Rechtsanwälte Barth
Charles Hassa Peckmann & Partner mbB
Friedrichstrasse 31
80801 München (DE)**

(56) Entgegenhaltungen:
**CN-A- 107 218 904        JP-A- H04 172 213
US-A1- 2011 288 806        US-A1- 2014 078 260**

• **Anonymous: "Bandoberflächen", , 23. August 2019 (2019-08-23), XP055677353, Gefunden im Internet:
URL:http://www.habasit.com/de/bandoberflaechen.htm [gefunden am 2020-03-18]**

**Beschreibung**

Die vorliegende Erfindung betrifft ein Verfahren zur Kalibrierung eines optischen Messsystems, ein optisches Messsystem sowie ein optisches Messsystem mit einem Kalibrierobjekt zum Kalibrieren des optischen Messsystems.

Stand der Technik

US 2011/288 806 A1 beschreibt ein Verfahren zum Kalibrieren eines Messsystems. In einem ersten Schritt wird strukturiertes Licht auf ein erstes, lineares Profil projiziert, um eine lineare Kalibrierung auszuführen. In einem weiteren Schritt wird eine nichtlineare Kalibrierung mittels eines weiteren Homographie-Profils ausgeführt.

JP H04 172213 A beschreibt ein Kalibrierverfahren, wobei Bilder eines Kalibrierobjekt an bekannten Positionen erfasst werden.

US 2014/078260 A1 beschreibt ein Verfahren zum Erfassen von dreidimensionalen Punkten, wobei für einen Kalibriervorgang ein vorgegebenes Muster auf ein Objekt projiziert wird.

CN 107 218 904 A beschreibt ein Verfahren zum Kalibrieren eines Sensors mittels eines sägezahnförmigen Ziels, um nichtlineare Linsenfehler zu kompensieren.

Für die Vermessung der Oberfläche eines Objekts können beispielsweise sogenannten Tiefenkameras verwendet werden. Ein solches System mit einer Tiefenkamera umfasst beispielsweise eine Lichtquelle, die das zu vermessende Objekt beleuchtet sowie einen optischen Sensor. Die Lichtquelle, beispielsweise ein Laser, projiziert auf das zu vermessende Objekt eine Lichtebene. Darüber hinaus kann zwischen dem zu vermessenden Objekt und dem Sensor eine Optik vorgesehen sein, welche das von dem zu vermessenden Objekt reflektierte Licht auf den Sensor fokussiert. Die Lichtquelle, das zu vermessende Objekt und der Sensor sind üblicherweise voneinander beabstandet angeordnet, wobei die einzelnen Elemente an den Eckpunkten eines virtuellen Dreiecks angeordnet sein können.

Für das Vermessen eines Objekts ist es dabei erforderlich, die Abbildungsvorschrift von der Lichtebene, in der sich das zu vermessende Objekt befindet, auf die Sensorebene, in der sich der Sensor befindet, zu ermitteln. Neben dieser in der Regel linearen Abbildung können durch die Optik zwischen dem Objekt und dem Sensor weitere, nicht-lineare Verzerrungen auftreten. Diese nicht-linearen Verzerrungen aufgrund von Linsenfehlern oder ähnlichem, müssen ebenfalls kompensiert werden.

Konventionelle Verfahren erfordern hierzu mindestens zwei separate Kalibrierschritte. In einem ersten Schritt werden die nicht-linearen Anteile ermittelt, die beispielsweise durch die Optik zwischen dem Objekt und dem Sensor verursacht werden. Nachdem diese nicht-linearen Anteile ermittelt worden sind, kann in einem weiteren, separaten Schritt, eine lineare Abbildung von der Lichtebene zur Sensorebene ermittelt werden, bei der die zuvor ermittelten nicht-linearen Fehler eliminiert worden sind.

Für diese Kalibriervorgänge, insbesondere für die Ermittlung der linearen Abbildung von der Lichtebene zur Sensorebene muss in der Regel die Position eine Kalibrierobjekts in der Lichtebene bekannt sein, um die Abbildungsvorschrift von der Lichtebene zur Sensorebene ermitteln zu können.

Vor diesem Hintergrund ist es eine Aufgabe der vorliegenden Erfindung, eine verbesserte, insbesondere vereinfachte und zuverlässige Kalibrierung für ein optisches Messsystem bereitzustellen. Insbesondere soll der Aufwand für die Kalibrierung des optischen Messsystems reduziert werden. Darüber hinaus sollen auch die Anforderungen an den Benutzer während des Kalibriervorgangs vereinfacht werden.

Offenbarung der Erfindung

Die vorliegende Erfindung schafft ein Verfahren zur Kalibrierung eines optischen Messsystems und ein optisches Messsystem mit den Merkmalen der unabhängigen Patentansprüche. Weitere vorteilhafte Ausführungsformen sind Gegenstand der abhängigen Patentansprüche.

Gemäß einem ersten Aspekt der Erfindung ist ein Verfahren gemäß des unabhängigen Anspruchs 1 vorgesehen.

Gemäß einem zweiten Aspekt der Erfindung ist ein optisches Messsystem gemäß des unabhängigen Anspruchs 8 vorgesehen.

Gemäß einem dritten Aspekt der Erfindung ist ein optisches Messsystem mit einem Kalibrierobjekt gemäß den abhängigen Ansprüchen 11 und 12 vorgesehen.

Das Kalibrierobjekt weist dabei mehrere Kanten auf. Insbesondere können sich jeweils einige der Kanten an Eckpunkten schneiden. Beispielsweise kann das Kalibrierobjekt eine Sägezahnstruktur aufweisen.

Vorteile der Erfindung

Der vorliegenden Erfindung liegt die Erkenntnis zugrunde, dass die Kalibrierung eines optischen Messsystems einen aufwändigen, komplexen und somit auch zeitintensiven Prozess darstellt. In der Regel müssen dabei zunächst nicht-lineare Verzerrungen, die beispielsweise durch eine Optik zwischen dem zu vermessenden Objekt und dem Sensor verursacht werden, und die lineare Abbildung von der Lichtebene auf die Sensorebene bei kompensierten nicht-linearen Verzerrungen, getrennt voneinander ermittelt werden. Darüber hinaus müssen bei konventionellen Messsystemen in der Regel die Positionen der zu vermessenden Objekte während des Kalibriervorgangs möglichst genau bekannt sein. Dies erfordert eine sehr präzise Positionierung der Objekte in der Lichtebene.

Es ist daher eine Idee der vorliegenden Erfindung, dieser Erkenntnis Rechnung zu tragen und eine Kalibrierung für ein optisches Messsystem vorzusehen, welche einen benutzerfreundlichen, einfachen und dabei gleichzeitig sehr präzisen Kalibriervorgang für das optische Messsystem ermöglicht.

Hierzu ist es vorgesehen, die nicht-linearen Komponenten und die linearen Komponenten für die Abbildung von der Lichtebene in die Sensorebene gemeinsam in einem einzigen Kalibrierschritt zu ermitteln. Dabei kann die Kalibrierung des optischen Messsystems mittels eines Kalibrierobjekts erfolgen, das während des Kalibrierobjekts frei im Messbereich der Lichtebene bewegt werden kann. Eine Positionierung des Kalibrierobjekts an genau vorgegebenen Positionen und/oder mit genau vorgegebenen Ausrichtungen während des Kalibriervorgangs ist dabei nicht erforderlich.

Während des Kalibrierungsvorgangs werden von dem optischen Messsystem mehrere Aufnahmen des kalibrieren Objekts an verschiedenen Positionen erfasst. Beispielsweise können für die Kalibrierung mindestens 30 oder 50 Aufnahmen des kalibrieren Objekts erfasst werden. Aber auch eine davon abweichende Anzahl von auf, beispielsweise eine größere Anzahl, wie zum Beispiel 100,200 oder noch mehr Aufnahmen des kalibrieren Objekts ist möglich.

Weiterhin erfolgt der Kalibriervorgang des optischen Messsystems mittels nur einem einzigen Kalibrierobjekt. Dieses Kalibrierobjekt ist dazu geeignet, sowohl die nicht-linearen als auch die linearen Anteile der Abbildung von der Lichtebene in die Sensorebene zu ermitteln.

Bei dem Messsystem kann es sich beispielsweise um ein Messsystem handeln, welches ein von einer Lichtquelle beleuchtetes Objekt optisch erfasst. Die Beleuchtung des Objekts kann dabei mittels einer Lichtquelle, beispielsweise einem Laser oder ähnlichem erfolgen. Beispielsweise kann die Lichtquelle das zu vermessende Objekt mit einem vorgegebenen Lichtmuster beleuchten. Insbesondere kann die Beleuchtung des Objekts mit kohärentem Licht erfolgen. Das von dem Objekt reflektierte Licht wird daraufhin mittels der Optik auf die Sensorebene des optischen Sensors abgebildet. Somit kann der Sensor Bilddaten von dem Objekt bereitstellen, welche für eine Weiterverarbeitung ausgewertet werden können. Insbesondere kann die Weiterverarbeitung beispielsweise eine Analyse der Oberfläche des zu vermessenden Objekts umfassen. Selbstverständlich sind auch beliebige andere Vorgänge zur Auswertung der Bilddaten von dem Objekt möglich.

Für die Weiterverarbeitung der Bilddaten können die Rohbilddaten von dem Sensor zunächst unter Verwendung einer bekannten Abbildung von der Lichtebene, in der sich das Objekt befindet, auf die Sensorebene, in der der Sensor die Bilddaten erfasst, aufbereitet werden. Wie zuvor bereits beschrieben, können dabei auch gegebenenfalls optische Verzerrungen oder ähnliches, die beispielsweise durch die Optik verursacht werden, kompensiert werden.

Gemäß einer Ausführungsform kann der Schritt zum Detektieren der Eckpunkte in den Aufnahmen des Kalibrierobjekts ein Detektieren von Kanten in den Aufnahmen des Kalibrierobjekts umfassen. Die detektierten Kanten können daraufhin ausgewertet werden, um Schnittpunkte der detektierten Kanten zu bestimmen. Diese Schnittpunkte der Kanten entsprechen Eckpunkten in den Aufnahmen des Kalibrierobjekts. Auf diese Weise können die Eckpunkte in den Aufnahmen des Kalibrierobjekts einfach und dennoch präzise ermittelt werden. Insbesondere kann die Genauigkeit der Positionen der so detektierten Eckpunkte auf Grundlage von detektierten Linienverläufen erhöht werden. Zur Detektion der Linien und zur Bestimmung der Schnittpunkte der Linien können beliebige geeignete bekannte oder neuartige Verfahren herangezogen werden.

Gemäß einer Ausführungsform erfolgt das Zuordnen der detektierten Eckpunkte in den Aufnahmen des Kalibrierobjekts zu den korrespondierenden Positionen an dem Kalibrierobjekt unter Verwendung von relativen Beziehungen. Insbesondere können relative Beziehungen von detektierten Eckpunkten in den Aufnahmen des Kalibrierobjekts in Bezug auf relative Beziehungen von vorbestimmten Positionen in dem Kalibrierobjekt gesetzt werden. Bei den vorbestimmten Positionen in dem Kalibrierobjekt kann es sich insbesondere um Eckpunkte in dem Kalibrierobjekt handeln. Durch die Betrachtung von relativen Beziehungen, beispielsweise Längenverhältnisse, Winkel oder ähnlichem kann dabei die Zuordnung ohne Betrachtung von absoluten Größen erfolgen. Auf diese Weise kann das Matching der Eckpunkte zusätzlich verbessert werden.

Gemäß einer Ausführungsform kann das Erfassen der Aufnahmen des beleuchteten Kalibrierobjekts an mehreren räumlich verschiedenen Positionen erfolgen. Weiterhin kann das Erfassen der Aufnahmen des Kalibrierobjekts mit unterschiedlichen Ausrichtungen des Kalibrierobjekts erfolgen. Dies kann beispielsweise dadurch erreicht werden, dass das Kalibrierobjekt in der Lichtebene translatorisch und/oder rotatorisch bewegt wird. Dabei sind ausdrücklich auch rotatorische Bewegungen des Kalibrierobjekts möglich und erlaubt. Die genaue Position bzw. Ausrichtung des Kalibrierobjekts muss dabei nicht bekannt sein. Somit kann das Kalibrierobjekt während des Kalibriervorgangs frei in der Lichtebene bewegt werden. Dies kann beispielsweise durch eine manuelle Bewegung des Kalibrierobjekts in der Lichtebene erfolgen. Selbstverständlich kann auch eine maschinell unterstützte Bewegung des Kalibrierobjekts mittels einer geeigneten Vorrichtung oder ähnlichem verwendet werden.

Gemäß einer Ausführungsform erstrecken sich die räumlichen Positionen, an denen eine Aufnahme des Kalibrierobjekts erfasst wird, über die zu kalibrierende Lichtebene. Die Positionierung des Kalibrierobjekts sollte sich dabei über einen möglichst weiten Bereich der Lichtebene erstrecken, die während des Kalibriervorgangs kalibriert werden soll.

Gemäß einer Ausführungsform umfasst das Kalibrierverfahren einen Schritt zum Ausgeben von Anweisungen zur Positionierung des Kalibrierobjekts. Diese Anweisungen können beispielsweise auf einem Display angezeigt werden, oder als akustische Anweisungen ausgegeben werden. Auf diese Weise kann ein Benutzer während des Kalibriervorgangs geführt werden, so dass das Kalibrierobjekt über alle erforderlichen Bereiche der Lichtebene geführt wird. Alternativ können die Anweisungen auch Steuerbefehle umfassen, die eine ganze oder teilweise automatisierte Vorrichtung zur Positionierung des Kalibrierobjekts steuert.

Die während der Kalibrierung ermittelte Abbildung wird unter Verwendung von mehreren Aufnahmen eines Kalibrierobjekts ermittelt, wobei die Aufnahmen jeweils das gleiche Kalibrierobjekt erfassen. Mit anderen Worten, der Kalibriervorgang kann mittels eines einzigen Kalibrierobjekts durchgeführt werden. Insbesondere sind keine unterschiedlichen Kalibrierobjekte für die Ermittlung von linearen Abbildungsanteilen und nicht-linearen Abbildungsanteilen erforderlich.

Die ermittelte Abbildung umfasst eine Kombination einer linearen Abbildung und einer nicht-linearen Abbildung. Diese Kombination wird dabei in einem einzigen, gemeinsamen Berechnungsvorgang ermittelt. Es sind somit ausdrücklich keine separaten Vorgänge für die Ermittlung einer nicht-linearen Abbildung, beispielsweise für Linsenverzerrungen oder ähnliches und einer linearen Abbildung erforderlich.

Gemäß einer Ausführungsform umfasst die Abbildung eine Polynom-Abbildung. Die Polynom-Abbildung kann dabei einen vorbestimmten Grad aufweisen. Beispielsweise kann es sich um eine Polynom-Abbildung vierten Grades handeln. Grundsätzlich sind jedoch auch Polynom-Abbildungen mit einem anderen Grad, beispielsweise zwei oder drei oder auch mehr als vier, zum Beispiel fünf, sechs oder mehr möglich.

Die Informationen über das Kalibrierobjekt, insbesondere charakteristische Daten, wie zum Beispiel vorbestimmte Eckpunkte in dem Kalibrierobjekt, sind vorab bekannt. Beispielsweise können diese charakteristischen Daten über ein Kalibrierobjekt in einem Speicher abgespeichert und bei Bedarf bereitgestellt werden. Sollen, beispielsweise für unterschiedliche Einsatzzwecke, mehrere Kalibrierobjekte zur Auswahl stehen, so kann der Speicher auch charakteristische Daten mehrerer Kalibrierobjekte bereitstellen.

Das Kalibrierobjekt kann insbesondere ein Kalibrierobjekt sein, welches mehrere Eckpunkte aufweist, insbesondere Eckpunkte, an denen sich jeweils mehrere Kanten schneiden. Im einfachsten Fall wäre beispielsweise ein Kalibrierprofil mit einem Sägezahnprofil möglich.

Gemäß einer Ausführungsform kann das Kalibrierprofil mehrere zueinander versetzte Sägezahnstrukturen aufweisen. Das Kalibrierprofil kann dabei beispielsweise zwei oder auch mehrere zueinander versetzte Sägezahnstrukturen aufweisen. Darüber hinaus sind auch andere Kalibrierprofile mit geeigneten Strukturen möglich, welche mehrere Ecken aufweisen. Dabei sind insbesondere Kalibrierprofile von Vorteil, bei welchen die einzelnen Ecken in einer relativen Position zueinander stehen, die auch bei einem Verdrehen des Kalibrierprofils noch zuverlässig detektiert und zugeordnet werden können.

Die obigen Ausgestaltungen und Weiterbildungen lassen sich, soweit sinnvoll, beliebig miteinander kombinieren. Weitere Ausgestaltungen und Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung, da der volle Schutzumfang der gegenwärtigen Erfindung durch die anhängigen Ansprüche definiert wird.

Insbesondere wird der Fachmann dabei auch Einzelaspekte als Verbesserungen oder Ergänzungen zu den jeweiligen Grundformen der Erfindung hinzufügen. Weitere Merkmale und Vorteile der Erfindung werden nachfolgend anhand der Figuren erläutert.

Dabei zeigen:

Figur 1: eine schematische Darstellung eines Prinzipschaubilds eines optischen Messsystems gemäß einer Ausführungsform;

Figur 2: eine schematische Darstellung der Beziehung eines Profils zwischen Lichtebene und Sensorebene;

Figur 3: eine schematische Darstellung mehrerer Aufnahmen eines Kalibrierprofils gemäß einer Ausführungsform;

Figur 4: eine schematische Darstellung eines Kalibrierobjekts gemäß einer Ausführungsform; und

Figur 5: eine schematische Darstellung eines Ablaufdiagramms, wie es einem Verfahren zur Kalibrierung eines Messsystems gemäß einer Ausführungsform zugrunde liegt.

Beschreibung der Ausführungsformen

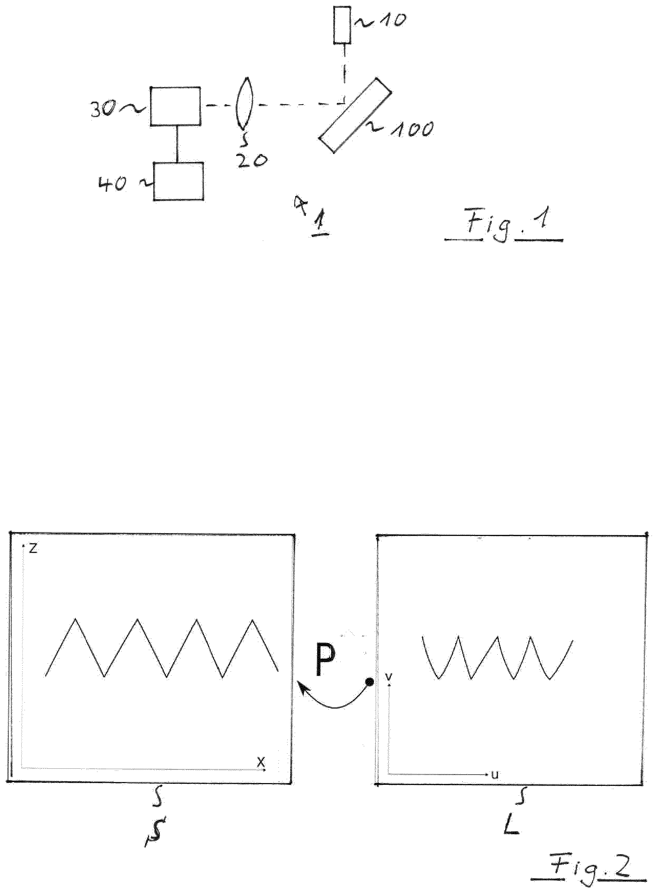

Figur 1 zeigt eine schematische Darstellung eines Prinzipschaubilds eines Messsystems 1 gemäß einer Ausführungsform. Das Messsystem umfasst eine Lichtquelle 10, eine Optik 20 und einen Sensor 30. Weiterhin kann das Messsystem eine Verarbeitungseinrichtung 40 umfassen. In dem Messsystem 1 wird ein Objekt 100 von einer Lichtquelle 10 beleuchtet. Das Objekt kann sich hierbei insbesondere in einer sogenannten Lichtebene befinden. Das von dem Objekt 100 reflektierte Licht wird mittels der Optik 20 auf einen Sensor 30 in einer sogenannten Sensorebene fokussiert. Der Sensor 30 liefert daraufhin Bilddaten, die von einer Verarbeitungseinrichtung 40 verarbeitet werden können. Insbesondere kann die Verarbeitungseinrichtung 40 die von dem Sensor 30 bereitgestellten Rohbilddaten aufbereiten. Hierzu kann während eines Kalibriervorgangs eine optimale Abbildung von der Lichtebene auf die Sensorebene ermittelt werden. Diese optimale Abbildung kann sowohl Nicht-Linearitäten umfassen, beispielsweise Linsenverzerrungen der Optik 20 oder ähnliches, als auch lineare Abbildungen, wie zum Beispiel eine Homographie. Die optimale Abbildung von der Lichtebene auf die Sensorebene wird dabei während eines Kalibriervorgangs ermittelt.

Erfindungsgemäß kann die optimale Abbildung von der Lichtebene in die Sensorebene in einem gemeinsamen Schritt die Nicht-Linearitäten und die lineare Abbildung ermitteln. Insbesondere kann dies dadurch erfolgen, dass ein einziges Kalibrierobjekt während des Kalibriervorgangs in der Lichtebene an mehreren Positionen positioniert wird und dabei eine Aufnahme des Kalibrierobjekts durch den Sensor 30 erfolgt. Durch die Auswertung mehrerer solcher Aufnahmen kann daraufhin die optimale Abbildung von der Lichtebene in die Sensorebene ermittelt werden.

Für den Kalibriervorgang kann insbesondere ein Kalibrierobjekt mit mehreren Eckpunkten verwendet werden. Beispielsweise kann es sich dabei im einfachsten Fall um ein zickzackförmiges Sägezahnprofil handeln.

Figur 2 zeigt eine schematische Darstellung des Zusammenhangs zwischen einem zickzackförmigen Profil in der Lichtebene L und der korrespondierenden Aufnahme in der Sensorebene S. Durch die Ermittlung der optimalen Abbildung P soll es dabei ermöglicht werden, aus den von dem Sensor 30 bereitgestellten Bilddaten in der Sensorebene wieder auf die tatsächliche Struktur des abgebildeten Objekts in der Lichtebene schließen zu können.

Im Nachfolgenden wird die Ermittlung einer optimalen Abbildung P von der Sensorebene in die Lichtebene beschrieben.

Für die Kalibrierung, das heißt die Ermittlung der optimalen Abbildung P, wird ein bekanntes Kalibrierobjekt in den Erfassungsbereich des Sensors 30 gebracht und von der Lichtquelle 10 beleuchtet. Das Kalibrierobjekt wird dabei während des Kalibriervorgangs in der Lichtebene und im Sensor 30 erfasst, und der Sensor 30 stellt daraufhin Aufnahmen von dem Kalibrierobjekt bereit. Diese Aufnahmen umfassen jeweils Bilddaten von dem Kalibrierobjekt in der Lichtebene. Das Kalibrierobjekt wird dabei innerhalb der Lichtebene translatorisch und gegebenenfalls auch rotatorisch bewegt. Je nach Ausgestaltung des Kalibrierobjektes ist es dabei ausdrücklich möglich, dass das Kalibrierobjekt während des Kalibrierobjekts auch verdreht werden darf. Für die Kalibrierung sollte das Kalibrierobjekt dabei möglichst über den ganzen Erfassungsbereich des Sensors 30 innerhalb der Lichtebene bewegt werden.

Für die Kalibrierung des optischen Messsystems 1 werden von dem Sensor 30 mehrere Aufnahmen des Kalibrierungsobjekts erfasst. Dabei kann das Kalibrierungsobjekt über den gesamten zu kalibrieren den Bereich in der Lichtebene hinwegbewegt werden. Besondere sind beispielsweise 50 oder mehr Aufnahmen des Kalibrierobjekts an verschiedenen Positionen innerhalb der Lichtebene möglich. Aber auch eine von 50 abweichende Anzahl von Aufnahmen, insbesondere mehr Aufnahmen, wie zum Beispiel 100, 200 oder noch mehr Aufnahmen von dem Kalibrierobjekt, sind möglich.

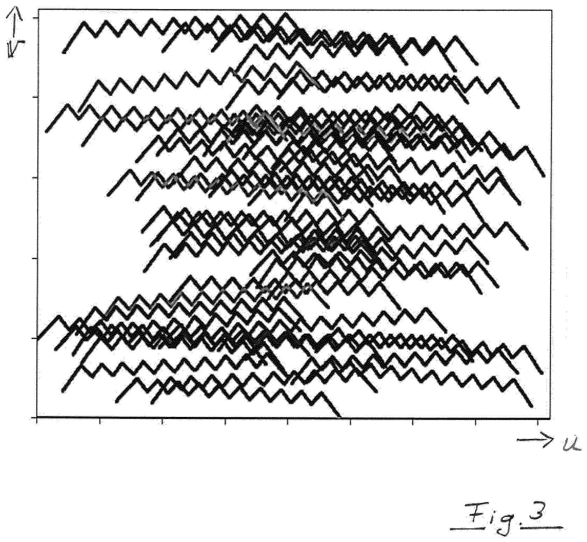

Figur 3 zeigt eine beispielhafte Darstellung, in der mehrere Aufnahmen des Kalibrierobjekts in der Sensorebene S dargestellt sind.

Aus dieser Sammlung von aufgenommenen Einzelprofilen wird zunächst für jede einzelne Aufnahme eine Kenngröße bestimmt. Im Falle eines Zickzack- oder Sägezahnprofils sind diese die Umkehrpunkte bzw. Eckpunkte des Profils. Hierzu kann beispielsweise ein adaptiver Split-and-Merge-Algorithmus in Kombination mit einem hierarchischen Cluster-Verfahren verwendet werden. Dabei kann der Profilverlauf möglichst gut durch eine alternierende Reihe von angepassten Linien approximiert werden. Die Schnittpunkte dieser Linien stellen die Kenngrößen des Profils dar. Sollte es beispielsweise aufgrund einer Fehlmessung nicht möglich sein, ein Profil zu approximieren, so kann es automatisch verworfen werden. Nach Extraktion der Umkehr- bzw. Eckpunkte wird die Aufnahme nicht weiter benötigt.

Für die Bestimmung der optimalen Abbildung werden die relativen Beziehungen der Eckpunkte aller Aufnahmen des Kalibrierobjekts an den jeweiligen Positionen auf dem Sensor entsprechend einer relativen Beziehung zwischen den korrespondierenden Eckpunkten auch dem Kalibrierprofil zugewiesen. Dabei werden vorzugsweise die Abweichungen aller Übereinstimmungen gleichzeitig minimiert.

Da nur relative Beziehungen von benachbarten Eckpunkten betrachtet werden, ist diese Zuordnung unabhängig von einer konkreten Koordinatdarstellung der Eckpunkte. Für die Bestimmung der optimalen Abbildung von der Sensorebene auf die Lichtebene kann beispielsweise eine Polynomabbildung P bestimmt werden. Seien X und Z die Koordinaten eines Punktes in der Lichtebene und u und v die entsprechenden Koordinaten in der Sensorebene, dann ist die Polynomabbildung P gegeben durch:

$$P^{(n)}: (u, v) \quad \rightarrow \quad (X, Z)$$

$$X(u,v) \quad = \quad P_X^{(n)}(u,v) = \sum_{i,j=0}^{n} a_{i,j} u^i u v^j$$

$$Z(u,v) \quad = \quad P_Z^{(n)}(u,v) = \sum_{i,j=0}^{n} b_{i,j} u^i u v^j$$

Die Abbildung P wird durch die Mononom-Koeffizienten a und b vollständig beschrieben. Für Linsenverzerrungsmodelle hat sich beispielsweise ein Grad von n == 4 als geeignet erwiesen. Selbstverständlich sind auch von 4 abweichende Grade für die Polynomabbildung P möglich.

Durch eine geeignete Optimierung können die Mononom-Koeffizienten für die optimale Abbildung ermittelt werden. Das Ergebnis einer solchen Optimierung ist jedoch nicht nur eine einzige Abbildung, sondern unendlich viele, die sich nur in der konkreten Parametrisierung der Kenngrößen des Kalibrierobjektes unterscheiden. Rotation und Translation des Kalibrierobjekts innerhalb der Lichtebene lassen die relative Beziehung zwischen den Kenngrößen unverändert. Dagegen werden ortsabhängige Veränderungen zwischen korrespondierenden Kenngrößen auf der Sensorebene, die durch die Perspektive und die Linsenverzerrung entstehen, erfasst.

Aus den Lösungen der Optimierungsaufgabe für die Bestimmung der Mononom-Koeffizienten kann eine beliebige Lösung gewählt werden, da sich die einzelnen Lösungen lediglich in der Koordinatenwahl innerhalb der Lichtebene unterscheiden.

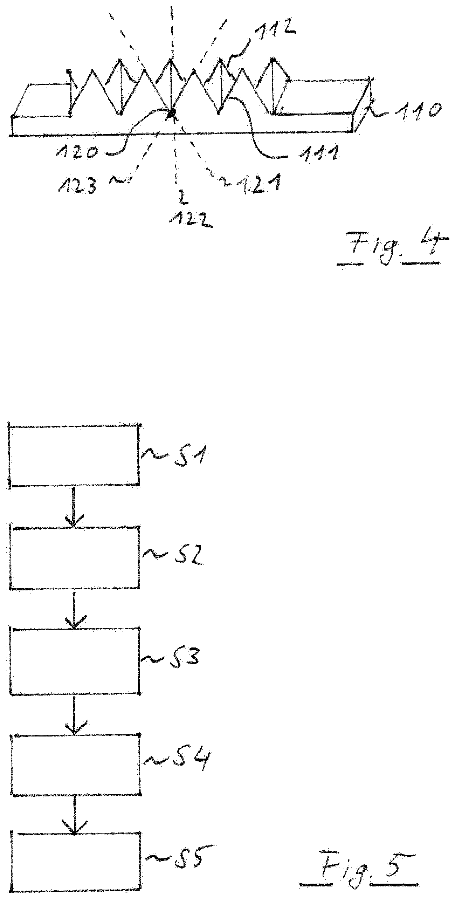

Für eine möglichst effiziente Kalibrierung des Messsystems 1 kann ein im Vergleich zu einem einfachen Sägezahnmuster erweitertes Kalibrierobjekt verwendet werden. Ein solches erweitertes Kalibrierobjekt 110 ist beispielsweise schematisch in Figur 4 dargestellt. Das erweiterte Kalibrierobjekt unterscheidet sich von einem einfachen Sägezahnmuster dadurch, dass es aus mehreren zueinander versetzten Sägezahnmustern besteht. Beispielsweise weist das Kalibrierobjekt 110 in Figur 4 in der Ebene 111 ein erstes Sägezahnmuster auf, und in der Ebene 112 ein dazu versetztes weiteres Sägezahnmuster. Ein Eckpunkt 120 wird dabei beispielsweise durch die auf diesen Eckpunkt zulaufenden Linien 121, 122 und 123 charakterisiert.

Bei einer idealen Positionierung eines solchen erweiterten Kalibrierobjekts 110, das heißt parallel zur Lichtebene, erzeugt dieses Kalibrierobjekt 110 ebenfalls ein symmetrisches Sägezahnprofil. Eine Verkippung oder Verdrehung des Kalibrierobjekts 110 in der Lichtebene führt jedoch dazu, dass sich die Abstände benachbarter Sägezähne relativ zueinander so ändern, dass zusammen mit den bekannten charakteristischen Linien auch die Verdrehung oder Verkippung geschlossen werden kann.

Figur 5 zeigt eine schematische Darstellung eines Ablaufdiagramms, wie es einem Verfahren zur Kalibrierung eines optischen Messsystems 1 gemäß einer Ausführungsform zugrunde liegt. Das Verfahren kann dabei insbesondere alle Schritte ausführen, die zuvor im Zusammenhang mit dem optischen Messsystem bereits beschrieben worden sind. Analog kann auch das zuvor beschriebene optische Messsystem beliebige Schritte ausführen, wie sie nachfolgend im Zusammenhang mit dem Kalibrierverfahren beschrieben werden.

Das Verfahren zum Kalibrieren des optischen Messsystems 1 kann insbesondere auf ein zuvor beschriebenes Messsystem 1 mit einer Lichtquelle 10, einer Optik 20 und einem Sensor 30 angewendet werden.

In einem ersten Schritt S1 wird ein Kalibrierobjekt 110 von der Lichtquelle 10 in einer Lichtebene beleuchtet. Dabei können in Schritt S2 mehrere Aufnahmen des beleuchteten Kalibrierobjekts 110 mittels des Sensors 30 erfasst werden. Wie zuvor bereits beschrieben, befindet sich der Sensor 30 dabei in einer Sensorebene. In Schritt S3 werden Eckpunkte des Kalibrierobjekts 110 in den Aufnahmen detektiert. In Schritt S4 werden daraufhin die detektierten Eckpunkte zu korrespondierenden vorbestimmten Positionen an dem Kalibrierobjekt 110 zugeordnet. Schließlich wird in Schritt S5 eine Abbildung P von der Lichtebene in die Sensorebene unter Verwendung der detektierten Eckpunkte und der korrespondierenden Positionen an dem Kalibrierobjekt 110 ermittelt.

Die Detektion der Eckpunkte kann dabei insbesondere durch Detektion von Kanten in den Aufnahmen des Kalibrierobjekts und einer Bestimmung der Schnittpunkte der detektierten Kanten erfolgen.

Das Zuordnen der detektierten Eckpunkte zu korrespondierenden Positionen an dem Kalibrierobjekt kann unter Verwendung von relativen Beziehungen der Eckpunkte zueinander und der relativen Beziehungen der vorbestimmten Positionen an dem Kalibrierobjekt erfolgen.

Die Aufnahmen des beleuchteten Kalibrierobjekts können insbesondere Aufnahmen umfassen, bei denen sich das Kalibrierobjekt an unterschiedlichen räumlichen Positionen und/oder mit unterschiedlichen räumlichen Ausrichtungen befindet. Insbesondere kann das Kalibrierobjekt über die gesamte Lichtebene hinweg bewegt werden. Wie zuvor bereits beschrieben, sind für den Kalibriervorgang beispielsweise 50 Aufnahmen des Kalibrierobjekts innerhalb des zu kalibrieren Bereiches möglich. Aber auch eine davon abweichende Anzahl von gegebenenfalls nur 30 Aufnahmen oder mehr als 50 Aufnahmen, Beispielsweise 100, 200 oder mehr Aufnahmen ist möglich.

Beispielsweise kann die Bewegung des Kalibrierobjekts automatisiert mittels einer geeigneten Vorrichtung erfolgen, welche das Kalibrierobjekt über den Bereich der Lichtebene hinweg bewegt.

Erfindungsgemäß wird die Bewegung allerdings einfach durch einen Benutzer ausgeführt, der das Kalibrierobjekt innerhalb der Lichtebene manuell bewegt. Gegebenenfalls kann der Benutzer dabei mittels geeigneter optischer oder akustischer Ausgaben dazu geleitet werden, das Kalibrierobjekt in geeigneter Weise über die Lichtebene hinweg zu bewegen.

Zusammenfassend betrifft die vorliegende Erfindung das Kalibrieren eines optischen Messsystems. Dabei erfolgt die Kalibrierung des Messsystems in einem einzigen Schritt, der sowohl lineare als auch nicht-lineare Anteile der Beziehung zwischen Lichtebene und Sensorebene berücksichtigt. Der Kalibriervorgang erfolgt dabei unter Verwendung eines einzigen Kalibrierobjektes, das in beliebiger Weise während des Kalibriervorgangs durch die Lichtebene hindurch bewegt wird. Durch die Analyse von Kenngrößen an dem Kalibrierobjekt und den korrespondierenden Aufnahmen des Messsystems kann in einfacher und effizienter Weise eine Kalibrierung des Messsystems erfolgen.

**Patentansprüche**

1. Verfahren zum Kalibrieren eines optischen Messsystems (1), wobei das Messsystem (1) eine Lichtquelle (10), eine Optik (20) und einen Sensor (30) umfasst, mit den Schritten:

   - Beleuchten (S1) eines Kalibrierobjekts (110) in einer Lichtebene mittels der Lichtquelle (10);
   - Erfassen (S2) mehrerer Aufnahmen des beleuchteten Kalibrierobjekts (110) mittels des Sensors (10) in einer Sensorebene, wobei das Kalibrierobjekt (110) während des Erfassens der mehreren Aufnahmen durch einen Benutzer frei in einem Messbereich bewegt wird;
   - Detektieren (S3) von Eckpunkten in den Aufnahmen des Kalibrierobjekts;
   - Zuordnen (S4) der detektierten Eckpunkte zu korrespondierenden vorbestimmten Positionen an dem Kalibrierobjekt; und
   - Ermitteln (S5) einer Abbildung von der Sensorebene in die Lichtebene unter Verwendung der detektierten Eckpunkte und der korrespondierenden Positionen an dem Kalibrierobjekt,
   wobei die ermittelte Abbildung eine Kombination einer linearen Abbildung und einer nicht-linearen Abbildung umfasst, die in einem einzigen gemeinsamen Berechnungsvorgang ermittelt wird,
   wobei die Abbildung unter Verwendung von mehreren Aufnahmen nur eines einzigen Kalibrierobjekts (110) ermittelt wird.

2. Verfahren nach Anspruch 1, wobei das Detektieren (S3) der Eckpunkte ein Detektieren von Kanten in den Aufnahmen des Kalibrierobjekts und ein Bestimmen von Schnittpunkten der detektierte Kanten umfasst.

3. Verfahren nach Anspruch 1 oder 2, wobei das Zuordnen (S4) der detektierten Eckpunkte zu den korrespondierenden Positionen an dem Kalibrierobjekt (110) unter Verwendung von relativen Beziehungen der detektierten Eckpunkte zueinander und relativen Beziehungen der vorbestimmten Positionen an dem Kalibrierobjekt (110) erfolgt.

4. Verfahren nach einem der Ansprüche 1 bis 3, wobei das Erfassen (S2) der Aufnahmen des beleuchteten Kalibrierobjekts das Kalibrierobjekt (110) an mehreren verschiedenen räumlichen Positionen und/oder mit unterschiedlichen räumlichen Ausrichtungen des Kalibrierobjekts (110) erfolgt.

5. Verfahren nach Anspruch 4, wobei sich die räumlichen Positionen über die Ausdehnung der zu kalibrierenden Lichtebene erstrecken.

6. Verfahren nach einem der Ansprüche 1 bis 5, mit einem Schritt zum Ausgeben von Anweisungen zur Positionierung des Kalibrierobjekts (110).

7. Verfahren nach einem der Ansprüche 1 bis 6, wobei die Abbildung eine Polynomabbildung mit einem vorbestimmten Grad umfasst.

8. Optisches Messsystem (1), mit:

einer Lichtquelle (10), die dazu ausgelegt ist, ein Objekt in einer Lichtebene zu beleuchten;

einem Sensor (30), der dazu ausgelegt ist, Licht von der Lichtebene in einer Sensorebene zu erfassen;

einer Optik (20), die zwischen dem Sensor (30) und der Lichtebene angeordnet ist, und dazu ausgelegt ist, Licht von der Lichtebene auf die Sensorebene zu fokussieren; und

einer Verarbeitungseinrichtung (40), die dazu ausgelegt ist, in einem Kalibriervorgang Sensordaten mehrerer Aufnahmen des Sensors (30) von einem Kalibrierobjekt (110) zu erfassen während das Kalibrierobjekt (110) durch einen Benutzer frei in einem Messbereich bewegt wird, Eckpunkte in den Aufnahmen des Kalibrierobjekts zu detektieren, die detektierten Eckpunkte korrespondierenden vorbestimmten Positionen an dem Kalibrierobjekt (110) zuzuordnen und eine Abbildung von der Sensorebene in die Lichtebene unter Verwendung der detektierten Eckpunkte und der korrespondierenden Positionen an dem Kalibrierobjekt (110) zu ermitteln,

wobei die Verarbeitungseinrichtung (40) ferner dazu ausgelegt ist, den Kalibriervorgang unter Verwendung mehrerer Aufnahmen eines einzigen Kalibrierobjekts (110) auszuführen, und

wobei die Verarbeitungseinrichtung (40) dazu ausgelegt ist, in einem einzigen gemeinsamen Berechnungsvorgang für die ermittelte Abbildung eine Kombination einer linearen Abbildung und einer nicht-linearen Abbildung zu ermitteln.

9. Optisches Messsystem nach Anspruch 8, mit einem Speicher, der dazu ausgelegt ist, charakteristische Daten mindestens eines Kalibrierobjekts (110) bereitzustellen.

10. Optisches Messsystem (1) nach Anspruch 8 oder 9, wobei die Verarbeitungseinrichtung (40) dazu ausgelegt ist eine Aufnahme eines Objekts unter Verwendung der in dem Kalibriervorgang ermittelten Abbildung verarbeiten.

11. Optisches Messsystem (1) nach einem der Ansprüche 8 bis 10, mit einem Kalibrierobjekt (110) für das optisches Messsystem (1), wobei das Kalibrierobjekt (21) eine Sägezahnstruktur aufweist.

12. Optisches Messsystem (1) nach Anspruch 11, wobei das Kalibrierobjekt (110) mehrere zueinander versetzte Sägezahnstrukturen aufweist.

## Claims

1. Method for calibrating an optical measurement system (1), the measurement system (1) comprising a light source (10), an optical element (20) and a sensor (30), having the steps of:

- illuminating (S1) a calibration object (110) in a light plane by means of the light source (10);
- capturing (S2) a plurality of images of the illuminated calibration object (110) by means of the sensor (10) in a sensor plane, the calibration object (110) being moved freely within a measurement region by a user while the plurality of images are being captured;
- detecting (S3) corner points in the images of the calibration object;
- assigning (S4) the detected corner points to corresponding predetermined positions on the calibration object; and
- determining (S5) a mapping from the sensor plane to the light plane using the detected corner points and the corresponding positions on the calibration object,

wherein the determined mapping comprises a combination of a linear mapping and a non-linear mapping, which is determined in a single joint calculation process, wherein the mapping is determined using a plurality of images of just a single calibration object (110).

2. Method according to claim 1, wherein detecting (S3) the corner points includes detecting edges in the images of the calibration object and determining intersection points of the detected edges.

3. Method according to either claim 1 or claim 2, wherein assigning (S4) the detected corner points to the corresponding positions on the calibration object (110) takes place using relative mutual relationships of the detected corner points and relative relationships of the predetermined positions on the calibration object (110).

4. Method according to any of claims 1 to 3, wherein capturing (S2) the images of the illuminated calibration object takes place with the calibration object (110) in a plurality of different spatial positions and/or with different spatial orientations of the calibration object (110) .

**EP 3 798 570 B1**

5. Method according to claim 4, wherein the spatial positions extend over the expanse of the light plane to be calibrated.

6. Method according to any of claims 1 to 5, comprising a step for outputting instructions for positioning the calibration object (110).

7. Method according to any of claims 1 to 6, wherein the mapping comprises a polynomial mapping of a predetermined degree.

8. Optical measurement system (1), comprising:

a light source (10) configured to illuminate an object in a light plane;
a sensor (30) configured to capture light from the light plane in a sensor plane;
an optical element (20) arranged between the sensor (30) and the light plane and configured to focus light from the light plane onto the sensor plane; and
a processing means (40) configured to capture sensor data of a plurality of images of a calibration object (110) from the sensor (30) in a calibration process while the calibration object (110) is moved freely within a measurement region by a user, to detect corner points in the images of the calibration object, to assign the detected corner points to corresponding predetermined positions on the calibration object (110), and to determine a mapping from the sensor plane to the light plane using the detected corner points and the corresponding positions on the calibration object (110),
wherein the processing device (40) is further configured to carry out the calibration process using a plurality of images of a single calibration object (110), and
wherein the processing device (40) is configured to determine a combination of a linear mapping and a non-linear mapping for the determined mapping in a single joint calculation process.

9. Optical measurement according to claim 8, comprising a memory configured to provide characteristic data of at least one calibration object (110).

10. Optical measurement system (1) according to either claim 8 or claim 9, wherein the processing means (40) is configured to process an image of an object using the image determined in the calibration process.

11. Optical measurement system (1) according to any of claims 8 to 10, comprising a calibration object (110) for the optical measurement system (1), wherein the calibration object (21) has a saw tooth structure.

12. Optical measurement system (1) according to claim 11, wherein the calibration object (110) has a plurality of mutually offset saw tooth structures.

**Revendications**

1. Procédé destiné à étalonner un système de mesure optique (1), dans lequel le système de mesure (1) comprend une source lumineuse (10), une optique (20) et un capteur (30), comportant les étapes suivantes :

- éclairage (S1) d'un objet d'étalonnage (110) dans un plan lumineux à l'aide de la source lumineuse (10) ;
- enregistrement (S2) de plusieurs images de l'objet d'étalonnage éclairé (110) à l'aide du capteur (10) dans un plan de capteur, dans lequel l'objet d'étalonnage (110) est déplacé librement par un utilisateur dans une plage de mesure pendant l'enregistrement des plusieurs images ;
- détection (S3) de points clés dans les images de l'objet d'étalonnage ;
- association (S4) des points clés détectés à des positions prédéfinies correspondantes au niveau de l'objet d'étalonnage ; et
- détermination (S5) d'une reproduction du plan de capteur dans le plan lumineux en utilisant les points clés détectés et les positions correspondantes au niveau de l'objet d'étalonnage,
dans lequel la reproduction déterminée comprend une combinaison d'une reproduction linéaire et d'une reproduction non-linéaire, qui est déterminée dans une seule opération de calcul commune,
dans lequel la reproduction est déterminée en utilisant plusieurs images d'un seul objet d'étalonnage (110) uniquement.

2. Procédé selon la revendication 1, dans lequel la détection (S3) des points clés comprend une détection de bords dans les images de l'objet d'étalonnage et une définition de points d'intersection des bords détectés.

3. Procédé selon la revendication 1 ou 2, dans lequel l'association (S4) des points clés détectés aux positions correspondantes au niveau de l'objet d'étalonnage (110) s'effectue en utilisant des relations relatives des points clés détectés les uns par rapport aux autres et des relations relatives des positions prédéfinies au niveau de l'objet d'étalonnage (110).

4. Procédé selon une des revendications 1 à 3, dans lequel l'enregistrement (S2) des images de l'objet d'étalonnage éclairé s'effectue avec l'objet d'étalonnage (110) au niveau de plusieurs positions spatiales différentes et/ou avec des orientations spatiales différentes de l'objet d'étalonnage (110).

5. Procédé selon la revendication 4, dans lequel les positions spatiales s'étendent sur l'étendue du plan lumineux à étalonner.

6. Procédé selon une des revendications 1 à 5, comportant une étape destinée à émettre des instructions de positionnement de l'objet d'étalonnage (110).

7. Procédé selon une des revendications 1 à 6, dans lequel la reproduction comprend une reproduction de polynôme avec un degré prédéfini.

8. Système de mesure optique (1), comportant :

   une source lumineuse (10), qui est conçue pour éclairer un objet dans un plan lumineux ;
   un capteur (30), qui est conçu pour enregistrer la lumière du plan lumineux dans un plan de capteur ;
   une optique (20), qui est disposée entre le capteur (30) et le plan lumineux et qui est conçue pour focaliser la lumière du plan lumineux sur le plan de capteur ; et
   un moyen de traitement (40), qui est conçu pour enregistrer dans une opération d'étalonnage des données de capteur de plusieurs images du capteur (30) d'un objet d'étalonnage (110) pendant que l'objet d'étalonnage (110) est déplacé librement par un utilisateur dans une plage de mesure, pour détecter des points clés dans les images de l'objet d'étalonnage, pour associer les points clés détectés à des positions prédéfinies correspondantes au niveau de l'objet d'étalonnage (110) et pour déterminer une reproduction du plan de capteur dans le plan lumineux en utilisant les points clés détectés et les positions correspondantes au niveau de l'objet d'étalonnage (110),
   dans lequel le moyen de traitement (40) est en outre conçu pour réaliser l'opération d'étalonnage en utilisant plusieurs images d'un seul objet d'étalonnage (110), et
   dans lequel le moyen de traitement (40) est conçu pour déterminer une combinaison d'une reproduction linéaire et d'une reproduction non-linéaire dans une seule opération de calcul commune pour la reproduction déterminée.

9. Système de mesure optique selon la revendication 8, comportant une mémoire qui est conçue pour fournir des données caractéristiques d'au moins un objet d'étalonnage (110) .

10. Système de mesure optique (1) selon la revendication 8 ou 9, dans lequel le moyen de traitement (40) est conçu pour traiter une image d'un objet en utilisant la reproduction déterminée dans l'opération d'étalonnage.

11. Système de mesure optique (1) selon une des revendications 8 à 10, comportant un objet d'étalonnage (110) pour le système de mesure optique (1), dans lequel l'objet d'étalonnage (21) présente une structure en dents de scie.

12. Système de mesure optique (1) selon la revendication 11, dans lequel l'objet d'étalonnage (110) présente plusieurs structures en dents de scie décalées les unes par rapport aux autres.

30 ~ □    ⬭    ⌐|⌐ ~ 10
              20      ~ 100

40 ~ □

                    ↗ 1

_Fig.1_

Z                           v
                            u

P

S                           L

_Fig.2_

Fig. 3

*Fig. 4*

*Fig. 5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011288806 A1
- JP H04172213 A
- US 2014078260 A1
- CN 107218904 A